# EUROPEAN PATENT APPLICATION

(11) **EP 2 662 783 A1**
(43) Date of publication of application: **13.11.2013**
(21) Application number: 13002380.7
(22) Date of filing: 03.05.2013
(51) Int. Cl.: G06F 17/30

(54) **Data archiving approach leveraging database layer functionality**

(30) Priority: 08.05.2012 US 201213466644
(71) Applicant: SAP AG, 69190 Walldorf (DE)
(72) Inventor: Herbst, Axel, 69190 Walldorf (DE)
(74) Representative: Müller-Boré & Partner Patentanwälte

(57) **Abstract**

A data archiving approach exploits functionality already existing within a database layer, utilizing additional information received from an application layer. Rather than writing archive-eligible records to a separate archive layer, a central module of an application layer receives from the database layer, the name of the database table to which stored records belong. This central module determines primary key fields of the table, and extracts values of those primary key fields. The central module may then leverage an existing capability (e.g. data aging, table partitioning) of the database layer, informing it of the eligible records (identified by table name and primary key values). The database layer may then move the archive-eligible records (e.g. in an asynchronous manner) to an appropriate level within a data storage hierarchy of the database layer. In some embodiments, the eligible records may be moved to lower cost (e.g. read-only) storage medium within the storage hierarchy.

## Description

### BACKGROUND

Embodiments of the present invention relate to data management systems, and in particular, to data archiving techniques.

Unless otherwise indicated herein, the approaches described in this section are not prior art to the claims in this application and are not admitted to be prior art by inclusion in this section.

Business data management systems, and in particular Enterprise Resource Planning (ERP) systems, may consume substantial storage resources. In general, types of storage media can differ with respect to characteristics such as speed, reliability, capacity, price, and energy consumption.

Usually, not all stored data need reside on expensive, high performance memory or high end disk space. In particular, the nature of some data to be archived (e.g. historic documents, data of closed business processes) may require only limited access.

Accordingly, the present disclosure addresses these and other issues with data archiving systems and methods.

### SUMMARY

A data archiving approach exploits functionality already existing within a database layer, utilizing additional information received from an application layer. Rather than writing archive-eligible records to a separate archive layer, a central module of an application layer receives from the database layer, the name of the database table to which stored records belong. This central module determines primary key fields of the table, and extracts values of those primary key fields. The central module may then leverage an existing capability (e.g. data aging, table partitioning) of the database layer, informing it of the eligible records (identified by table name and primary key values). The database layer may then move the archive-eligible records (e.g. in an asynchronous manner) to an appropriate level within a data storage hierarchy of the database layer. In some embodiments, the eligible records may be moved to lower cost (e.g. read-only) storage medium within the storage hierarchy.

An embodiment of a computer-implemented method comprises causing an archiving framework of an application layer, to obtain from a database layer, a name of a database table in which a record is stored. The archiving framework is caused to determine a primary key field of the database table. The archiving framework is caused to extract a value of the primary key field. The table name and the primary key value are communicated from the archiving framework to the database layer, such that an existing functionality of the database layer moves the record from the database to a data storage hierarchy of the database layer

An embodiment of a non-transitory computer readable storage medium embodies a computer program for performing a method comprising causing an archiving framework of an application layer, to obtain from a database layer, a name of a database table in which a record is stored. The archiving framework is caused to determine a primary key field of the database table. The archiving framework is caused to extract a value of the primary key field. The table name and the primary key value are communicated from the archiving framework to the database layer, such that an existing functionality of the database layer moves the record from the database to a data storage hierarchy of the database layer.

An embodiment of a computer system one or more processors and a software program executable on said computer system. The software program is configured to cause an archiving framework of an application layer, to obtain from a database layer, a name of a database table in which a record is stored. The archiving framework is caused to determine a primary key field of the database table. The archiving framework is caused to extract a value of the primary key field. The archiving framework is caused communicate the table name and the primary key value to the database layer, such that an existing functionality of the database layer moves the record from the database to a data storage hierarchy of the database layer.

In some embodiments, the existing functionality of the database layer comprises a data aging functionality.

According to certain embodiments, the existing functionality of the database layer comprises a table partitioning functionality.

In particular embodiments the record is associated with an object, and the method further comprises communicating from the archiving framework to the database layer, an identification of the object.

In some embodiments, the identification comprises an artificial instance-unique object identification.

A according to particular embodiments, the record is moved to a lower cost storage medium within the storage hierarchy.

In certain embodiments, the table name is communicated to the common archiving framework through an exclusive access channel.

The following detailed description and accompanying drawings provide a better understanding of the nature and advantages of particular embodiments.

### BRIEF DESCRIPTION OF THE DRAWINGS

Figure 1 shows a simplified view of an embodiment of a data archiving system.

Figure 2 shows a simplified process flow according to an embodiment.

Figure 3 shows a screen shot of a common archiving framework in an example.

Figure 4 shows a second screen shot according to an embodiment.

Figure 5 illustrates hardware of a special purpose computing machine configured to perform data archiving in accordance with an embodiment.

Figure 6 illustrates an example of a computer system.

### DETAILED DESCRIPTION

Described herein are techniques for archiving of data. The apparatuses, methods, and techniques described below may be implemented as a computer program (software) executing on one or more computers. The computer program may further be stored on a computer readable medium. The computer readable medium may include instructions for performing the processes described below.

In the following description, for purposes of explanation, numerous examples and specific details are set forth in order to provide a thorough understanding of the present invention. It will be evident, however, to one skilled in the art that the present invention as defined by the claims may include some or all of the features in these examples alone or in combination with other features described below, and may further include modifications and equivalents of the features and concepts described herein.

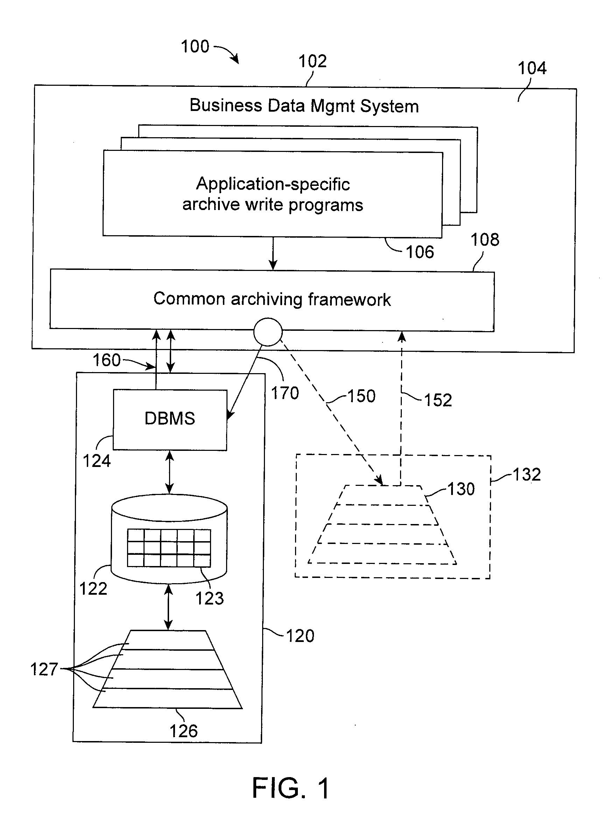

Figure 1 shows a simplified view of an embodiment of a data archiving system 100. In particular, an application layer 102 includes a business data management system 104 comprising a plurality of application-specific archive write programs 106. Examples include but are not limited to: write programs selecting archivable financial documents to be saved in an archive format allowing their removal from the database in a second step; write programs directed to data of orders closed for a long time; write programs for delivery confirmations no longer actively needed; and write programs collecting master data from customers no longer in business.

The application layer further comprises a common archiving framework or module 108. Central module 108 is in communication with the application-specific archive write programs, in order to direct eligible records for storage in an appropriate storage medium of a storage hierarchy. As described in detail below, rather than comprising a separate archive layer, according to particular embodiments this appropriate storage medium may comprise a part of the database layer.

Specifically, the system 100 further comprises a database layer 120. This database layer comprises a database 122 storing data organized according to a particular data structure, for example one or more tables 123 comprising rows and columns.

Objects comprising related pieces of data, may be stored in the database across different data structures (e.g. tables). In addition, where the data structure comprises a table, such a table may be partitioned into various regions, also known as partitions.

The database is in communication with the application layer through a database management system (DBMS) 124. As described in detail below, in certain embodiments the database may also be in communication with a storage hierarchy component 126 comprising a plurality of different storage media 127 exhibiting different characteristics (e.g. speed, cost, reliability, energy consumption).

In certain embodiments, the DBMS may manage an in-memory database configured to store "business objects" comprising multiple types of related business information. One example of such a DBMS is the SAP HANA^{™} system available from SAP AG, that is configured to store business objects information.

The storage hierarchy component 126 of the database layer may be accessed by the database through a data aging functionality. The storage hierarchy component may be accessed by the database via a table partitioning functionality.

Movement of the persisted instances of objects, from an expensive (main) memory to less expensive, secondary (e.g. magnetic disks-based) storage media, may be accomplished in a number of possible ways.

One approach to allocating storage within an available hierarchy, relies upon a data archive 130 that is present in a separate archiving layer. Examples of storage media available to the hierarchy of the archive, include solid-state main memory offering rapid access at relatively high expense, and secondary memory (e.g. of the magnetic- or optical-disk type) offering less rapid access at lower expense.

The arrow 150 shows a write operation to such a distinct archive layer by the application layer. The arrow 152 represents an access (read) operation from the separate archive to the application layer.

This data archiving approach is typically a long-running batch process, that is performed through the application software layer as background processing. The possible runtime of such data archiving approaches may occur over multiple days.

Such long-running data archiving batch processes are time-consuming. They tend to copy and delete all records, relying on a data transfer through the application layer that lies on top of the source and the destination storage.

For such data archiving to a separate layer, at least the copy/write phase must be executed synchronously. This allows copy/writing to be completed successfully before the deletion phase may commence.

Accordingly, for such data archiving approaches utilizing a separate archive layer, the resulting unavailability of the data in the database must be compensated for. This may be done by dispatching queries to the archive layer in those access scenarios where all data is to be returned to the user, regardless of where the data resides. This is costly from the perspectives of both implementation effort and runtime.

By contrast, archiving approaches according to various embodiments may exploit functionality already present within the database layer, to allocate resources within a storage hierarchy. In such approaches, data may be moved between the database and the data store hierarchy component 126 present within the database layer, according to a data aging functionality and/or according to a table partitioning functionality.

Data archiving according to such embodiments, may offer certain challenges. One is to accurately identify from the different database tables, those particular records relevant to a specific object qualifying for archiving, without disturbing other database records not belonging to the qualifying object. That is, the data movement strategy should not jeopardize logical accessibility, such that database queries from the application layer with appropriate selection criteria still reach the appropriate records.

Accurate identification of particular records eligible for movement by the database layer, may be difficult owing to the complexity of object data structures recognized in the application layer. In particular, the object structure of data within the application layer may no longer be apparent at the level of the data structures (e.g. tables) residing within the database layer, where only normalized relations may exist between records. And even where foreign key relationships are present in a database, they may tend to offer insufficient information to discern the structure of data object(s) of the application layer.

Choosing the wrong set of records (either too few or too many) may offer performance penalties when pushing the data down to, and/or when fetching the data back from, the storage hierarchy of the database layer. Approaches relying upon information other than object structure (for example statistical guesses based on insert time and access frequency) may result into poor data movement strategies.

According to embodiments, the problem of having a database layer accurately identify a correct set of records eligible for movement to a particular location within a data store hierarchy, may be solved by having the application layer provide appropriate information (also referred to herein as a "hint") to the database layer. Certain embodiments may integrate with an existing common archiving framework, changing behavior of the central module of the application layer that is referenced by archiving programs intending to pass selected records per table to a separate archive layer.

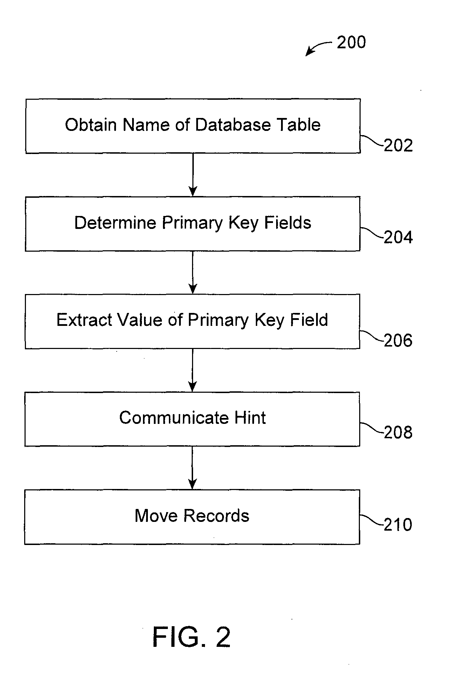

Thus rather than writing submitted records to such a separate archive layer, certain embodiments may perform the following steps outlined in the process flow 200 of Figure 2.

In step 202, the common archiving framework obtains from the database layer, the name of the database table to which the records belong. As shown in Figure 1, in certain embodiments this table name data may be communicated through an exclusive access channel 160.

In step 204, the common archiving framework determines the primary key fields of the database table. In step 206, the common archiving framework extracts the values of the primary key fields.

In step 208, the common archiving framework calls the data store hierarchy component of the database layer, to communicate information regarding the eligible records. These eligible records are identified sufficiently by the table name and primary key values obtained from the previous steps 1-3. Communication of this information (e.g. the hint), is indicated with the arrow 170 of Figure 1.

In certain embodiments, the hint may include communication of an object identification. This object identification may be attached to identified records making up an object instance. Some embodiments may involve automatic assignment of an artificial instance-unique object identification for records per instance by the database layer.

Embodiments can thus allow maintenance of knowledge regarding relationships between records. This may support proactive fetching/caching of records needed for a single object instance, as soon as a first record of an instance is sought to be brought back to a higher level of a storage hierarchy.

In step 210, based upon the hint information, the identified records are moved by the DBMS from the database to an appropriate location in the data storage hierarchy. In certain embodiments, this movement of records may be accomplished through a data aging functionality of the database layer. In some embodiments, this movement of records may be accomplished through a partitioning functionality of the database layer.

In particular embodiments, the movement of the identified records to the appropriate location within the data storage hierarchy component of the database layer, can be performed asynchronously. Such asynchronous movement may allow for improvement in performance in at least two ways.

First, the hinting operation finishes early. This allows the archiving program execution to continue without waiting for termination of time-consuming data transfer.

Second, asynchronous aging may also support collecting hints first, and then combining sets of collected records into one (or few) larger units (blocks, chunks). These larger units may then be moved to the appropriate location within a storage hierarchy in a single (or fewer) operations.

Example - Data Aging Functionality

The following illustrates a scenario in which a data aging functionality of a database layer is leveraged to provide a data archiving capability. In particular, this example illustrates a scenario of an application-specific archive write program for financial (FI) documents writing the document header "BKPF".

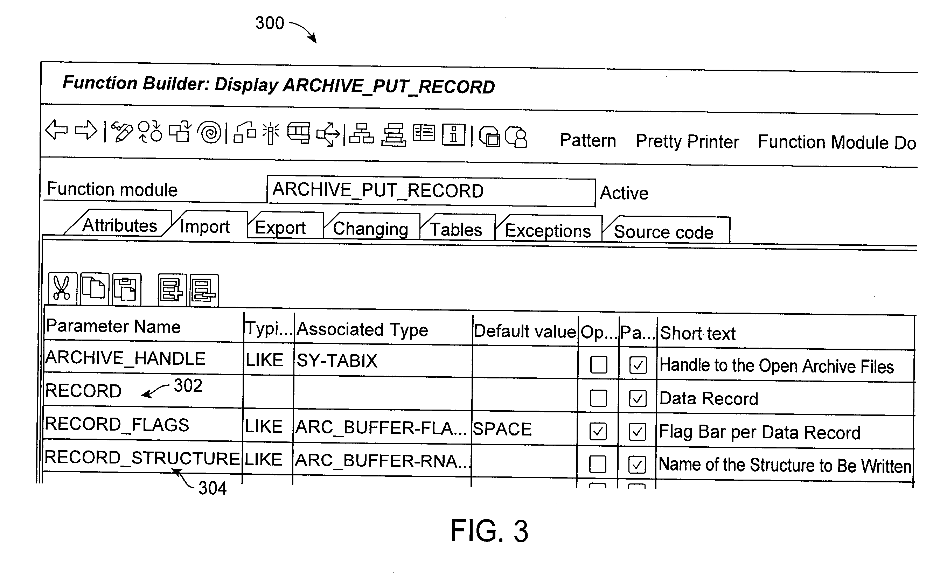

Figure 3 shows a screen shot 300 of the common archiving framework ("ADK") of the application layer, with which the embodiment can be integrated. In this screen shot, the parameter name "RECORD" 302 corresponds to the complete record comprising a basis for determining the values of the primary key fields. In this screen shot, the parameter name "RECORD_STRUCTURE" 304 comprises the name of the table or the basis to determine the table name (e.g. "BKPF").

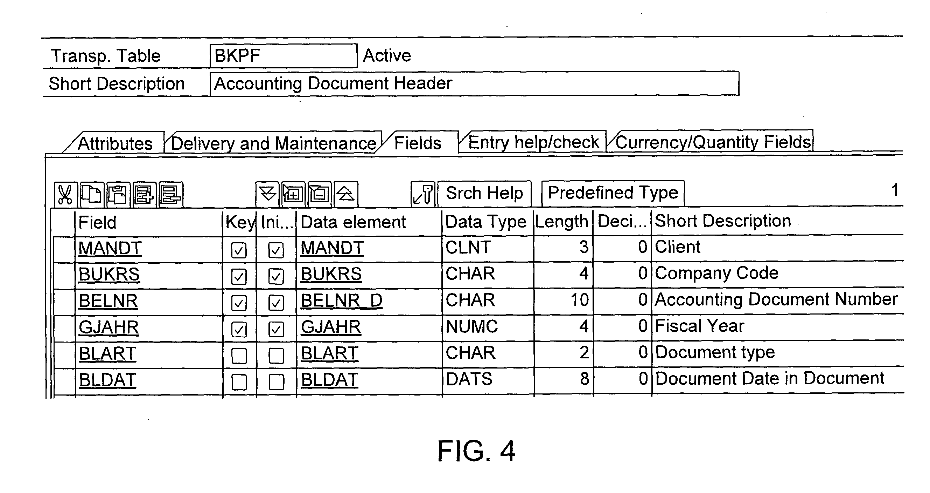

Figure 4 shows Table BKPF with four (4) primary key fields:
- MANDT = id of customer/client from whom the documents are managed
- BUKRS = company code to which the FI document refers;
- BELNR = number of the document instances;
- GJAHR = fiscal year to which the FI document refers.
Only the combination of these four (4) key fields is unique in this table of this Business Data Management system.

In this example, the following code may be employed to perform data archiving according to an embodiment:

### CALL FUNCTION 'ARCHIVE_PUT_RECORD'

### EXPORTING

archive_handle = lv_handle
record_structure = 'BKPF'
record = <pointer_to_bkpf_record>.
...

This coding is present in the archiving write program of the application layer. Implementation of the called FUNCTION module: 'ARCHIVE_PUT_RECORD', is thus performed in the common archive framework layer. It can therefore generically determine the primary key and create the qualified hint request.

Example - Table Partitioning Functionality

While the previous example relied upon a data aging capability of a database layer in order to perform an archive function, this is not required. Alternative embodiments may rely upon another functionality of the database layer for this purpose.

An example of such other database layer functionality is table partitioning. Specifically, according to certain embodiments, an existing data-containing table may be dynamically altered to introduce a partition, based upon hint information that is provided to the database layer by the common archiving framework of the application layer.

Specifically, according to certain embodiments an instruction (e.g. CREATE PARTITION) may be based on a table field holding a flag or an object instance identification. This table field may be additionally introduced. In some embodiments, the object instance identification can comprise an artificial identification that may be automatically assigned as described above. Thus hint-identified records may make up their own partition, which is then placed on less expensive storage.

In this example, partitions are formed according to the hints. Eligible data is shifted from a table to partitions deeper within a storage hierarchy. This approach assumes that creation of the partition, results in a movement process internal to the database.

Thus according to certain embodiments, every table can get another column. In some embodiments, this additional column can be created when the table is newly created. According to particular embodiments, an existing table can be changed using state of the art standard structured query language (SQL), e.g. ALTER TABLE table ADD column datatype.

This new column serves as partitioning column:
ALTER TABLE table PARTITION BY column.

In a simple embodiment, the new column is binary. That is, it can be updated to "yes" (or a set bit) for a certain record, once a hint identifies this record as eligible for archiving/aging.

Alternative embodiments can use the year when the hint is issued by the archiving framework or transferring the object instance identification.

Records that get updated in this column are directed into "archive partitions" - which may comprise one or more partitions per table. Multiple archive partitions per table may be employed when no binary datatype for the partitioning column is used. One example is when using a DATE datatype storing the year of archival together with an appropriate range definition for years when using the standard range partitioning method. Thus a table's records get shifted to dedicated archive partitions, depending on when the archiving takes place. Another example would include ranges for object instance identifications.

In this approach, it is assumed that "archive partitions" can be allocated in the deeper storage hierarchies.

Data archiving approaches according to various embodiments may offer certain benefits. For example, some embodiments may facilitate archiving of data from business data management systems utilizing an existing functionality of a database layer, rather than requiring a separate archiving layer.

Leveraging an existing capability of the database layer and a storage hierarchy component thereof, may promote scalability and expansion of business data management systems, without the time and effort of implementing a separate/distinct archiving layer. Examples of administrative effort associated with a separate/distinct archiving layer that may be reduced or eliminated by various embodiments, can include:
- making sure that archivability checks are passed;
- choosing fine grained selection parameters to exactly define a set of instances;
- taking into account the point in time when archiving jobs are acceptable.
By requiring less intelligent parameterization and job scheduling, embodiments may allow a higher automation potential to be realized.

Embodiments may be particularly suited for archiving data for in-memory database configurations (e.g. SAP HANA^{™}), where DBMS control can allow calculation of sums over as many as billions of records in memory. Embodiments may allow compensation for demands placed upon memory by such environments, particularly for tasks not requiring all records to be counted, and/or tasks calling for only hot access paths to be followed regularly.

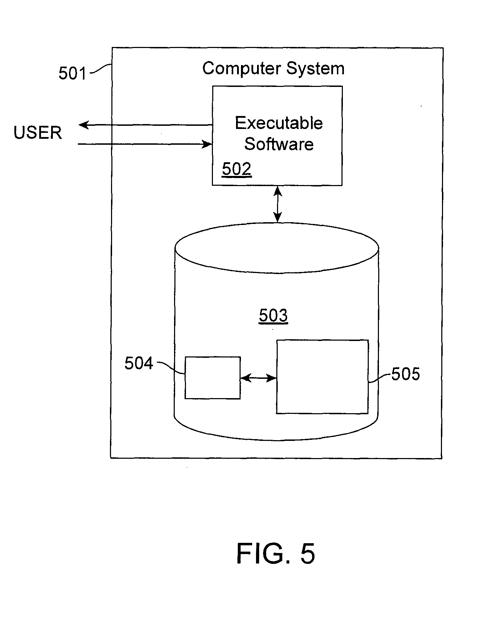

Fig. 5 illustrates hardware of a special purpose computing machine configured to perform data archiving according to an embodiment. In particular, computer system 500 comprises a processor 502 that is in electronic communication with a non-transitory computer-readable storage medium 503. This computer-readable storage medium has stored thereon code 505 corresponding to various aspects of a common archiving framework called upon by application specific archive write programs of an application layer. Code 504 corresponds to instructions for requesting information from the database layer, and returning hint information thereto. Code may be configured to reference data stored in a database of a non-transitory computer-readable storage medium, for example as may be present locally or in a remote database server. Software servers together may form a cluster or logical network of computer systems programmed with software programs that communicate with each other and work together in order to process requests.

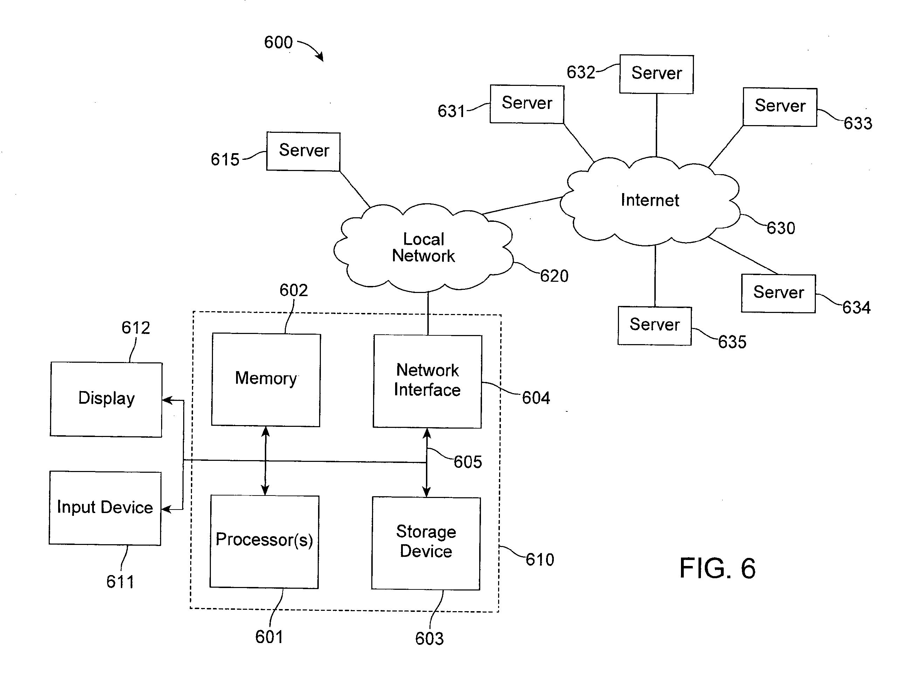

An example computer system 610 is illustrated in Fig. 6. Computer system 610 includes a bus 605 or other communication mechanism for communicating information, and a processor 601 coupled with bus 605 for processing information. Computer system 610 also includes a memory 602 coupled to bus 605 for storing information and instructions to be executed by processor 601, including information and instructions for performing the techniques described above, for example. This memory may also be used for storing variables or other intermediate information during execution of instructions to be executed by processor 601. Possible implementations of this memory may be, but are not limited to, random access memory (RAM), read only memory (ROM), or both. A storage device 603 is also provided for storing information and instructions. Common forms of storage devices include, for example, a hard drive, a magnetic disk, an optical disk, a CD-ROM, a DVD, a flash memory, a USB memory card, or any other medium from which a computer can read. Storage device 603 may include source code, binary code, or software files for performing the techniques above, for example. Storage device and memory are both examples of computer readable mediums.

Computer system 610 may be coupled via bus 605 to a display 612, such as a cathode ray tube (CRT) or liquid crystal display (LCD), for displaying information to a computer user. An input device 611 such as a keyboard and/or mouse is coupled to bus 605 for communicating information and command selections from the user to processor 601. The combination of these components allows the user to communicate with the system. In some systems, bus 605 may be divided into multiple specialized buses.

Computer system 610 also includes a network interface 604 coupled with bus 605. Network interface 604 may provide two-way data communication between computer system 610 and the local network 620. The network interface 604 may be a digital subscriber line (DSL) or a modem to provide data communication connection over a telephone line, for example. Another example of the network interface is a local area network (LAN) card to provide a data communication connection to a compatible LAN. Wireless links are another example. In any such implementation, network interface 604 sends and receives electrical, electromagnetic, or optical signals that carry digital data streams representing various types of information.

Computer system 610 can send and receive information, including messages or other interface actions, through the network interface 604 across a local network 620, an Intranet, or the Internet 630. For a local network, computer system 310 may communicate with a plurality of other computer machines, such as server 615. Accordingly, computer system 610 and server computer systems represented by server 615 may form a cloud computing network, which may be programmed with processes described herein. In the Internet example, software components or services may reside on multiple different computer systems 610 or servers 631-635 across the network. The processes described above may be implemented on one or more servers, for example. A server 631 may transmit actions or messages from one component, through Internet 630, local network 620, and network interface 604 to a component on computer system 610. The software components and processes described above may be implemented on any computer system and send and/or receive information across a network, for example.

The above description illustrates various embodiments of the present invention along with examples of how aspects of the present invention may be implemented. The above examples and embodiments should not be deemed to be the only embodiments, and are presented to illustrate the flexibility and advantages of the present invention as defined by the following claims. Based on the above disclosure and the following claims, other arrangements, embodiments, implementations and equivalents will be evident to those skilled in the art and may be employed without departing from the spirit and scope of the invention as defined by the claims.

## Claims

1. A computer-implemented method comprising:
causing an archiving framework of an application layer, to obtain from a database layer, a name of a database table in which a record is stored;
causing the archiving framework to determine a primary key field of the database table;
causing the archiving framework to extract a value of the primary key field; and
communicating the table name and the primary key value from the archiving framework to the database layer, such that an existing functionality of the database layer moves the record from the database to a data storage hierarchy of the database layer.

2. A method as in claim 1 wherein the existing functionality of the database layer comprises a data aging functionality.

3. A method as in claim 1 or 2 wherein the existing functionality of the database layer comprises a table partitioning functionality.

4. A method as in claim 3 wherein the record is associated with an object, and the method further comprises communicating from the archiving framework to the database layer, an identification of the object.

5. A method as in claim 4 wherein the identification comprises an artificial instance-unique object identification.

6. A method as in any one of claims 1 to 5 wherein the record is moved to a lower cost storage medium within the storage hierarchy.

7. A method as in any one of claims 1 to 6 wherein the table name is communicated to the common archiving framework through an exclusive access channel.

8. A non-transitory computer readable storage medium embodying a computer program for performing a method according to any one of the preceding claims.

9. A computer system comprising:
one or more processors;
a software program, executable on said computer system, the software program configured to:
cause an archiving framework of an application layer, to obtain from a database layer, a name of a database table in which a record is stored;
cause the archiving framework to determine a primary key field of the database table;
cause the archiving framework to extract a value of the primary key field; and
communicate the table name and the primary key value from the archiving framework to the database layer, such that an existing functionality of the database layer moves the record from the database to a data storage hierarchy of the database layer.

10. A computer system as in claim 9 wherein the existing functionality of the database layer comprises a data aging functionality.

11. A computer system as in claim 9 or 10 wherein the existing functionality of the database layer comprises a table partitioning functionality.

12. A computer system as in claim 11 wherein the record is associated with an object, and the computer system further causes an identification of the object to be communicated from the archiving framework to the database layer.

13. A computer system as in claim 12 wherein the identification comprises an artificial instance-unique object identification.

14. A computer system as in any of claims 9 to 13 wherein the record is moved to a lower cost storage medium within the storage hierarchy.
